# EUROPÄISCHE PATENTSCHRIFT

(11) **EP 1 450 144 B1**
(45) Veröffentlichungstag und Bekanntmachung des Hinweises auf die Patenterteilung: **16.10.2019**
(21) Anmeldenummer: 04003857.2
(22) Anmeldetag: 20.02.2004
(51) Int. Cl.: H04L 29/06, G01G 23/01

(54) **VERFAHREN UND VORRICHTUNG ZUR DIGITALEN SICHERUNG VON MESSWERTEN**
METHOD AND DEVICE FOR DIGITAL PROTECTION OF MEASURED VALUES
PROCÉDÉ ET DISPOSITIF POUR LA PROTECTION DIGITALE DE VALEURS MESURÉES

(30) Priorität: 24.02.2003 DE 10308092
(43) Veröffentlichungstag der Anmeldung: 25.08.2004
(73) Patentinhaber: Schenck Process Europe GmbH, 64293 Darmstadt (DE)
(72) Erfinder: Rauchschwalbe, Ulrich, Dr., 64846 Gross-Zimmern (DE); Henhapl, Birgit, Dr., 64354 Reinheim (DE); Wiesmaier, Alex, 64285 Darmstadt (DE); Ludwig, Christoph, 64285 Darmstadt (DE); Ruppert, Markus, 64297 Darmstadt (DE); Buchmann, Johannes, Prof. Dr., 64297 Darmstadt (DE)

(56) Entgegenhaltungen:
- EP-A- 0 949 563
- EP-A- 1 217 783
- WO-A-00/51284
- DE-A1- 10 022 402
- US-A1- 2001 002 485
- SCHMEH, KLAUS: "Kryptographie und Public-Key-Infrastrukturen im Internet" DPUNKT.VERLAG, 2001, Seiten 150-151, XP002383982 Heidelberg

## Beschreibung

Die Erfindung betrifft ein Verfahren zur digitalen Sicherung von Messwerten nach dem Oberbegriff des Patentanspruchs 1, sowie eine Messvorrichtung zur Durchführung dieses Verfahrens nach dem Oberbegriff des Patentanspruchs 8.

Viele abrechnungs- oder sicherheitsrelevanten Meßergebnisse müssen zu Nachweiszwecken nachvollziehbar gesichert werden. Dies wird häufig durch Protokollierung der Meßverfahren oder durch technische Sicherungssysteme erreicht. Insbesondere stellt sich das Problem bei den Gewichtsmessungen, denn mit derartigen Meßvorrichtungen wird häufig das Gewicht hochwertiger Güter oder das Gewicht von Massengütern festgestellt, die Grundlage von Liefer-und Abrechnungsverfahren sind. Deshalb ist es notwendig, daß diese Gewichtsmessung vorgegebenen Genauigkeitsanforderungen entspricht, die häufig auch nachprüfbar oder beweisbar sein müssen. Dies wird für viele Fälle durch gesetzliche nationale Vorschriften in Eichgesetzen geregelt, wozu derartige Wägevorrichtungen eichfähig sein müssen. Die Einhaltung dieser Eichvorschriften wird von den zuständigen Stellen oder Behörden kontrolliert und die Einhaltung dieser Vorschriften an den eichpflichtigen Waagen amtlich bestätigt. Die von einer derartigen Waage erstellten oder angezeigten Wägeergebnisse können deshalb durch die Bestätigungsvermerke an der Waage überprüft werden. Andere Wägeergebnisse sind hingegen nur durch Referenzgewichte oder Referenzwägungen auf geeichten Waagen kontrollierbar.

Bei modernen Waagen bestehen die Auswertevorrichtungen meist aus programmgesteuerten Rechenanlagen oder Prozessoren, bei denen insbesondere bei den eichfähigen Waagen sichergestellt sein muß, daß die unter Einhaltung der Eichvorschriften erfaßten Wägeergebnisse auf dem Weg bis zur Anzeige oder Weiterverarbeitung nicht manipulierbar sind. Dazu werden teilweise mechanisch gesicherte Wägeindikatoren mit schreibgeschützten Speichereinrichtungen eingesetzt, durch die die eichpflichtigen Messwerte dokumentiert und/oder archiviert werden.

Ein derartiges eichfähiges Wägesystem ist aus dem Kochsiek, Handbuch des Wägens, 2. Auflage, Braunschweig/Wiesbaden 1998, Seiten 567 und 568 bekannt, das aus einer analogen Waage besteht, die nicht lösbar mit einer digitalen Auswertevorrichtung verbunden ist, an die zur weiteren Wägedatenbearbeitung eine programmgesteuerte Datenverarbeitungsvorrichtung in Form eines Personalcomputers mit Monitor und Drucker lösbar angeschlossen ist. Die Auswertevorrichtung besteht dabei aus einer Verstärkerschaltung, einem Analog-Digital-Wandler, einer Mikroprozessorschaltung, an die ein eichfähiger Zwischenspeicher, eine Gewichtsanzeige und eine Schnittstellenschaltung fest angeschlossen sind. Da diese mikroprozessorgesteuerte Auswertevorrichtung (Wägeindikator) von der programmgesteuerten Datenverarbeitungsvorrichtung nicht steuerbar ist, wird gewährleistet, daß die im Zwischenspeicher abgelegten eichpflichtigen Wägedaten unmanipulierbar sind oder alle äußeren Eingriffe und Änderungen bei jedem Eichvorgang erkannt werden. Allerdings wird bei dieser Einrichtung nicht sichergestellt, daß die vom Personalcomputer weiterverarbeiteten oder angezeigten'Wägedaten mit denen des Wägeindikators übereinstimmen. Eine Überprüfung der vom Personalcomputer erstellten Wägedaten kann deshalb nur durch einen manuellen Vergleich mit den im . Wägeindikator archivierten Wägedaten vor Ort erfolgen.

Aus der EP 0 911 618 A1 ist eine elektronische Waage mit einer Wägezelle, einer Auswertevorrichtung, einem Datenspeicher für eichrelevante Wägedaten, einer Eingabe-und Anzeigeeinheit so wie einer eichtechnischen Sicherungseinrichtung für eichrelevante Wägedaten bekannt. Diese Wägevorrichtung enthält einen Datenspeicher, der erst nach Eingabe eines korrekten Eichpaßwortes beschreibbar ist. Der durch diese Waage angezeigte und erstellte Wägedatensatz kann deshalb nur durch Eingabe eines korrekten-Eichpaßwortes manipuliert werden. Da in dieser elektronischen Waage zusätzlich noch ein Protokolldatenspeicherbereich vorgesehen ist, wo Änderungen des Eichsatzes gezählt werden und dessen Zählerstand unveränderbar ist, können zumin dest Manipulationen an der eichtechnischen Sicherungseinrichtung festgestellt werden. Allerdings ist eine nachträgliche Überprüfung des Wägedatensatzes, der beispielsweise auf einem ortsfernen Drucker ausgegeben wurde, nur vor Ort an der elektronischen Waage durchführbar.

Aus der DE 44 41 231 C1 ist eine Standardrechenanlage mit einem programmierbaren elektrischen Zusatzschaltkreis zur Verarbeitung undWeiterleitung von eichfähigen Meßwertsignalen zu einem Videospeicher der Standardrechenanlage und zur Anzeige am Bildschirm bekannt. Dazu ist ein eichfähiger Meßwertaufnehmer vorgesehen, welcher mit einem Eingang für eichfähige Meßwertsignale des Zusatzschaltkreises mit der Datenverarbeitungseinheit verbunden ist. Der Zusatzschaltkreis umfaßt ferner einen schreibgeschützten programmierbaren Speicherbereich zur Aufnahme von Verschlüsselungsinformationen. Dazu werden vom Zusatzschaltkreis über eine Schnittstelle die anzuzeigenden Meßwerte und die damit zusammenhängenden Verschlüsselungsinformationen dem Videospeicher übermittelt, wobei die einmal angezeigten Meßwerte unmittelbar aus dem Videospeicher zurück gelesen und auf Identität mit der zuvor ausgegebenen Information überprüft werden. Ein positives Prüfergebnis ist dabei Voraussetzung für die Fortsetzung des Meßvorgangs. Die Meßwerte vom Zusatzschaltkreis zum Videospeicher der Standardrechenanlage können dabei auch über eine Funkstrecke oder einen op tischen Übertragungsweg übertragen werden. Zur Überprüfung der angezeigten und der zuvor in der Standardrechenanlage vom Zu satzschaltkreis übergebenen Meßwerte, wird .zunächst in einem schreibgeschützten EEPROM des Zusatzschaltkreises eine Prüfsumme abgelegt. Dann wird diese mit dem zuvor angezeigten Meß ergebnis, das in der Videospeicherkarte abgelegt ist, verglij chen. Dabei werden stets neue Prüfnummern mit einem vorgegebenen Algorithmus und einem vorgegebenen Zufallszahlenbereich 1 gebildet, wobei die vorgegebenen Zufallszahlen im schreibge schützten und verplombten Festwertspeicher liegen, so dass de ren Richtigkeit erkennbar ist. Allein durch die Rücklesung der Prüfsumme aus dem Videospeicher der Standardrechenanlage ist es auch über größere Entfernungen möglich, die Authentizität der eichfähigen Meßwerte mit den angezeigten sicherzustellen. Allerdings ist es bei dieser Meßvorrichtung nach einer gewis sen Zeitdauer nicht mehr feststellbar, ob die vormals angezeigten und danach auf Datenträgern gespeicherten Werte zwischenzeitlich nicht manipuliert wurden.
Weiterhin ist aus der DE 100 22 402 A1 ein Verfahren zum Ablesen von Zählersystemen bekannt, beim welchem die Zähler mittels einer Datenfernübertragung durch eine zentrale Stelle abgelesen werden. Die von den Zählern an die zentrale Stelle zu übertragenden Daten sind mit einem Verschlüsselungsverfahren mit einem Schlüsselpaar aus einem geheimen und öffentlichen Schlüssel derart verschlüsselt, dass diese auch nur mit dem zugehörigen anderen Schlüssel des Schlüsselpaares entschlüsselt werden können.

Der Erfindung liegt deshalb die Aufgabe zugrunde, einen von einer Wägevorrichtung erstellten Datensatz so zu sichern, daß bei dessen Übermittlung und Bearbeitung die Authentizität mit dem ursprünglichen Datensatz nachträglich und weitgehend ortsunabhängig nachprüfbar ist, insbesondere bei eichpflichtigen Wägeergebnissen.

Diese Aufgabe wird durch die in Patentanspruch 1 und Patentanspruch 8 angegebene Erfindung gelöst. Weiterbildungen und vorteilhafte Ausführungsbeispiele der Erfindung sind in den Unteransprüchen angegeben.

Die Erfindung hat den Vorteil, daß durch die digitale Sicherung der Meßergebnisse eine Kontrolle der Authentizität mit den ursprünglich erfaßten Meßergebnissen jederzeit nachträglich und ortsunabhängig von der ausgeführten Meßvorrichtung möglich ist. Dabei kann der komplette gesicherte Meßdatensatz über jeden beliebigen Weg übertragen und auf jedem geeigneten Speichermedium abgelegt oder auf Papierdokumenten wie Lieferscheinen und Rechnungen abgedruckt worden sein.

Die nachdem erfindungsgemäßen Verfahren erstellten Meßdatensätze können vorteilhafterweise auch von beliebigen Empfängern oder Dritten zeit-und ortsunabhängig auf Authentizität überprüft werden. Dieses Verfahren zur Sicherung der Meßdaten kann vorteilhafterweise auch für eichfähige Meßdaten erfolgen, die sowohl auf Manipulation als auch auf Übertragungsfehler überprüfbar sind. Dabei können bei Anwendung von speziellen Signaturverfahren, die zur qualifizierten Signatur zugelassen sind, auch Eichpflichtverletzungen nachgewiesen werden, die vorteilhafterweise auch ohne Mithilfe des Meßgerätebetreibers nach weisbar sind.

Bei einer besonderen Ausbildungsform der Erfindung, bei der die Meßvorrichtung das zur Sicherung notwendige Schlüsselpaar selbsttätig erstellt und den geheimen privaten Schlüssel ohne Kenntnis Dritter in einem auslesgeschützten Meßeräteprozessor speichert, kann vorteilhafterweise auf eine aufwendige Sicherungsinfrastruktur zur geheimen Generierung und Verwaltung verzichtet werden.

Bei einer weiteren besonderen Ausbildungsform der Erfindung, bei der der geheime private Schlüssel durch eine spezielle Software. aus Teilschlüsselzahlen verschiedener Speicherbereiche eines handelsüblichen Meßgerätespeichers zusammensetzbar sind, kann dieses Sicherungsverfahren eines Meßdatensatzes mit geringem Aufwand in handelsüblichen Meßgeräten integriert werden.

Eine weitere besondere Ausgestaltung der Erfindung, bei der die Signierung und Komprimierung der Meßdaten mittels des ECD SA-Verfahrens (Elliptic Curve Digital Signatur Algorithm) durchgeführt wird, hat den Vorteil, daß dies mit vergleichbar geringem Rechenaufwand und Rechenzeit durch herkömmliche Aus wertevorrichtungen möglich ist. Dadurch kann auf einfache Wiese die Sicherheit der Meßwertverarbeitung, sowie des Waren und Dienstleistungsverkehrs erhöht werden.

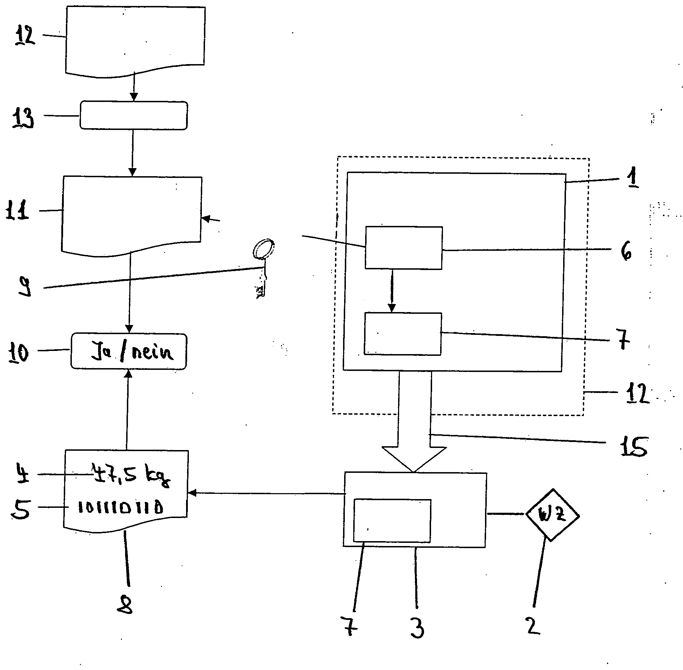

Die Erfindung wird anhand eines Ausführungsbeispiels, das in der Zeichnung dargestellt ist, näher erläutert. Die Zeichnung zeigt ein Ablaufdiagramm eines mit einer Waage 1 als Meßgerät erfaßten signierten und überprüften Meßergebnisses in schema tischer Darstellung.

Dazu ist als Meßvorrichtung eine Waage 1 vorgesehen; die aus einer Aufnehmervorrichtung mit mindestens einer Wägezelle 2 und einer programmgesteuerten digitalen Auswertevorrichtung 3 besteht. Bei dieser Waage 1 handelt es sich vorzugsweise um eine eichfähige Waage 1, dessen Meßwerteunmanipulierbar ge speichert und dokumentiert sind. Zur Sicherung dieser Wägeergebnisse werden diese mit einer digitalen Signatur versehen. Bei heute gebräuchlichen Waagen werden die durch die Meßwert aufnehmer ermittelten physikalischen Größen der Gewichtskraft meist in elektrische Signale umgewandelt, die einen Wert dar stellen, der dem Gewicht proportional ist. Bei einer derarti gen Waage wird die physikalische Meßgröße vorzugsweise durch mit Dehnungsmeßstreifen bestückten Wägezellen 2 ermittelt.

Diese Meßwertsignale werden einer Auswertevorrichtung 3 oder einem sogenannten Wägeindikator zugeführt, der daraus ein an zeigbares Wägeergebnis bildet. Dazu wird das von den Wägezel len 2 erzeugte analoge Meßsignal verstärkt und in einem vorge gebenen Takt abgetastet und danach mittels eines Analog Digital-Wandlers digitalisiert.

Die Digitalisierung wird dabei vorzugsweise in der Auswerte vorrichtung 3 durchgeführt, bei der es sich meist um eine pro grammgesteuerte Rechenanlage handelt, die insbesondere bei eichpflichtigen Wägeergebnissen vor Manipulation geschützt sein muß. Deshalb wird aus den von den Wägezellen 2 gelieferten Mëßwertsignalen in der Auswertevorrichtung 3 der Waage 1 ein Datensatz gebildet. Dieser besteht aus den Meßgrößen und weiteren gewichtsspezifischen Parametern sowie Identifikationsfaktoren, die eine nachprüfbare Bewertung der Richtigkeit dieses Meßergebnisses gewährleisten sollen. Bei eichpflichtigen Waagen 1 werden sowohl deren Aufnehmervorrichtungen 2 als auch deren Auswertevorrichtungen 3 in regelmäßigen Abständen von den dazu zuständigen Behörden überprüft, wobei die angezeigten oder dokumentierten Wägeergebnisse eine Identifizierung der eichpflichtigen Waage 1 und dessen Wägevorgang aufweisen müssen. Dazu wird bei einer digitalen Waage 1 ein anzeig-und dokumentierbarer Datensatz erzeugt, der mindestens das Wägeergebnis, eine Identifizierungskennzahl der Waage sowie den Wägevorgang mit Datum oder laufender Nummer enthält. Dieser Datensatz wird dann häufig für Lieferscheine und Abrechnungsverfahren verwendet und wird zum Zwecke der Überprüfung beim Waagenbetreiber zumindest bei einer eichpflichtigen Waage auch dokumentiert. Da eine derartige Überprüfung der Wägeergebnisse insbesondere der eichpflichtigen Meßwerte nur vor Ort und mit Unterstützung des Waagenbetreibers möglich ist, erzeugt das erfindungsgemäße Verfahren eine digitale Signatur zumindest der Wägeergebnisse. Die Überprüfung mit den erfassten Meßwerten ist dann orts-und zeitunabhängig möglich.

Dies ist insbesondere vorteilhaft bei der Überprüfung von Wägeergebnissen, deren Erfassung zeitlich und örtlich weit vom Empfangsort der Waren oder Abrechnungen entfernt ist. Dazu wird erfindungsgemäß eine Waage geschaffen, die eine Signierung des Wägeergebnisses, sowie weiterer Kunden-und Lieferdaten ermöglicht, die aufgrund einer digitalen Signatur nachprüfbar sind.
Bei der Herstellung des erfindungsgemäßen Meßgerätes, insbesondere der nachfolgend beschriebenen Waage 1, wird deshalb ein spezielles Signierungsverfahren vorgesehen, das mit Hilfe eines öffentlichen 9 und eines geheimen privaten Schlüssels arbeitet. Zur digitalen Sicherung der Meßergebnisse, insbeson dere der Wägeergebnisse wird vorzugsweise ein Komprimierungs und Signierungsverfahren der elliptischen Kurven (ECDSA) ver wendet, dessen Signaturlänge mindestens zweimal 160 Bit be trägt. Mit Hilfe eines derartigen Verfahrens wird ein erstell ter Wägedatensatz von einer Waage digital signiert, dessen Au thentizität auch auf Lieferscheinen und Rechnungen überprüft werden kann. Zur digitalen Signatur der Wägeergebnisse ist ein asymmetrisches Verfahren vorgesehen, bei dem ein korrespondierendes Schlüsselpaar erzeugt wird. Dabei wird der geheime private Schlüssel dieses Schlüsselpaares zur Signierung und der öffentliche Schlüssel 9 ausschließlich zur Überprüfung der Au thentizität des Datensatzes verwendet. Dazu wird das korre spondierende Schlüsselpaar aus dem allgemein zugänglichen öffentlichen Schlüssel und dem geheimen privaten Schlüssel bereits bei der Herstellung der Waage 1 von dessen Auswertevorrichtung 3 bzw.dessen Wägeindikator mittels einer Zufallszahl erzeugt. Zur Auswahl der dazu notwendigen Zufallszahl wird das niederwertigste Bit des Analog-Digital-Wandlerergebniss n-mal ausgelesen und zu einer n-stelligen Zufallszahl zusammengesetzt. Der Analog-Digital-Wandler wird dabei als hardwarebasierter Zufallsgenerator 6 ausgenutzt, da die Auflösung des Analog-Digital-Wandlers bei einer Waage 1 meist höher ist als seine Genauigkeit. Da auch die Stabilität des Meßwertes meist geringer ist als die Wertigkeit dieses niederwertigsten Bits, stellt dies auch bei unverändertem Meßwert eine rein stochastische nichtreproduzierbare Zahl dar.

Aus der so gewonnenen Zufallszahl wird durch einen Algorithmus nach dem Verfahren der elliptischen Kurven (ECDSA) das korrespondierende Schlüsselpaar erzeugt, wobei der private Schlüssel sogleich in einem Schlüsselspeicher 7 der Waage 1 nichtauslesbar gespeichert wird, während der öffentliche Schlüssel als Identifizierungskennzeichen der Waage 1 veröffentlicht wird. Zur Sicherung der Wägeergebnisse wird die Erzeugung des Schlüsselpaares beim Waagenhersteller in einer gesicherten Umgebung 12 durchgeführt, die sicherstellt, daß die Generierung des Schlüsselpaares geheim bleibt. Dazu wird vorgeschlagen, daß der öffentliche Schlüssel 9 vom Waagenhersteller selbst oder von einer vertrauenswürdigen Stelle 13 verwaltet oder bestätigt wird. Diese vertrauenswürdige Stelle 13 kann auch eine Behörde 12 oder eine von dieser zertifizierte Stelle sein, die die Zuordenbarkeit des öffentlichen Schlüssels 9 zu einer vor gesehenen Waage 1 garantiert. Die Zertifizierung des öffentlichen Schlüssels 9 zu einer bestimmten vorzugsweise einer eichfähigen Waage 1 kann dabei auch vom Waagenhersteller selbst durchgeführt und durch entsprechende Zertifikate weitergegeben werden.

Der von der Auswertevorrichtung 3 der Waage 1 selbsttätig erzeugte geheime private Schlüssel wird bei deren Herstellung in der gesicherten Umgebung 13 des Waagenherstellers selbsttätig in einem speziellen nicht auslesbaren Speicher 7 der Waage 1 abgelegt. Dazu wird der geheime private Schlüssel durch eine spezielle geheime Software des Waagenherstellers ∼ im Wägeda tenspeicher - an mehreren voneinander getrennten Speicherbereichen in Teilstücken abgelegt. Nach diesem Verfahren ist vorzugsweise ein herkömmlicher Wägedatenspeicher als Schlüs selspeicher 7 verwendbar, der eine hinreichende Sicherheit gegen einen unbefugten Zugriff auf den geheimen privaten Schlüssel gewährleistet. Allerdings können dazu auch spezielle Speicherchips als Schlüsselspeicher eingesetzt werden, die vom Hersteller gegen unbefugte Auslesbarkeit gesichert sind.

Bei der vorgesehenen Signatur 8 eines Wägeergebnisses 4 werden deshalb die in unterschiedlichen Speicherbereichen des Wägedatenspeichers 7 abgelegten Teilstücke des geheimen privaten Schlüssels ebenfalls mit Hilfe der geheimen Software zusammen gefügt und sind dann bei einer Signieranweisung verwendbar.

Dazu ist es nicht erforderlich, daß der Waagenhersteller oder der Waagenbenutzer diesen privaten Schlüssel jemals kennen oder eingeben muß. Dies ist ein zusätzlicher Sicherheits aspekt, der insbesondere bei eichpflichtigen Wägeergebnissen von Bedeutung ist und eine Unmanipulierbarkeit bei einer positiven Verifizierung der Signatur in hohem Maße gewährlei stet.
Eine derart hergestellte digitale Waage 1 mit nichtauslesbarem Schlüsselspeicher 7 wird nach deren Auslieferung 15 an einen Waagenbetreiber ein ermitteltes Wägeergebnis 4 oder einen Wägedatensatz nach folgendem Verfahren signieren:
Ein zu signierender Wägedatensatz besteht vorzugsweise aus den von der Wägezelle 2 gelieferten und ausgewerteten Wägesignalen, die einen Wert des Bruttogewichts darstellen, das unverfälschbar in der Auswertevorrichtung bzw. Wägeindikator gebildet wird. Weiterhin aus dem Taragewicht, einem Gewichtsstatus, dem Datum mit Uhrzeit und/oder einer laufenden Nummer der Wä gung sowie der Seriennummer der Waage 1 bzw. des Wägeindikators 3. Dieser Wägedatensatz 4 wird digital signiert. Zur Signatur wird der Datensatz innerhalb des Wägeindikators 3 komprimiert und um eine Signatur 5 ergänzt. Dazu wird durch das Verfahren der elliptischen Kurven (ECDSA) der Datensatz auf eine Signaturlänge von mindestens zweimal 160 Bit komprimiert und verschlüsselt. Zur Signatur 5 des komprimierten Datensatzes wird der private Schlüssel im Wägedatenprozessor 7 der Auswertevorrichtung 3 mit der speziellen geheimen Software zusammengesetzt und zur Signatur des komprimierten Datensatzes verwendet. Zur Verbesserung der Lesbarkeit wird die Signatur 5 in der Auswertevorrichtung 3 der Waage 1 in ASCII-Zeichen umgewandelt und dem Wägedatensatz angefügt. Dieser Datensatz 4 mit digitaler Signatur 5 versehen kann dann beispielsweise auf einem Lieferschein 8 oder einer Rechnung abgedruckt oder auch über Funk und andere Datenstrecken (z. B. Internet) an belie bige Orte übertragen und dort angezeigt oder ausgedruckt werden. Auf diesen Lieferscheinen 8 oder Rechnungen erscheint dann auch die gut lesbare Signatur 5 in ASCII-Zeichen, die eine Überprüfung des Wägedatensatzes ermöglicht.

Ein Empfänger dieses Wägedatensatzes bzw. des Lieferscheins 8 oder der. Rechnung kann nun durch Verifikation 10 feststellen, ob das signierte Wägeergebnis 4 oder der Wägedatensatz mit dem ursprünglich erstellten Wägedatensatz authentisch ist. Insbe sondere ist daraus ableitbar, ob die Wägung tatsächlich auf einer angegebenen eichpflichtigen Waage 1 stattgefunden hat und ob die dort angegebenen Ergebnisse nicht zwischen dessen Erfassung und Anzeige oder Übertragung manipuliert oder verändert worden sind.

Zur Verifikation 10 des Wägedatensatzes bzw. des Wägeergebnisses 4 ist ausschließlich der öffentliche Schlüssel 9 notwendig. Dieser wurde wie vorstehend beschrieben vom Waagenhersteller mittels ECDSA-Verfahren generiert, erstellt und einer vertrauensvollen Stelle 13 oder Behörde 12 übermittelt, die diesen öffentlichen Schlüssel 9 verwaltet und zumindest dem berechtigten Empfängerkreis durch ein Schlüsselverzeichnis 11 zur Verfügung stellt. Diese vertrauensvolle Stelle 13 kann aber auch der Waagenhersteller selbst sein. Die Behörde 12 oder die vertrauensvolle Stelle 13 kann den öffentlichen Schlüssel 9 auch zertifizieren und damit die Gewähr dafür übernehmen, daß dieser Schlüssel 9 einer bestimmten identifizierten Waage 1 eines identifizierbaren Betreibers zuordenbar ist. Es kann aber auch der Waagenhersteller durch eine derartige Behörde 12 oder vertrauensvolle Stelle 13 zertifiziert oder durch öffentlichen Schlüssel zertifiziert sein. Derartig zertifizierte öffentliche Schlüssel 9 für Waagen 1 oder andere Meßgeräte können sowohl an den Betreiber, den Nutzer der Waage oder an beliebige Dritte herausgegeben werden.

Mit einem derartig zertifizierten öffentlichen Schlüssel 9 und den Signierdaten 5, sowie den übermittelten Wägedaten 4 wird nun der Wägedatensatz verifiziert. Dazu wird zunächst der übermittelte signierte Datensatz 4, 5 nach dem ECDSA-Verfahren mit den zugehörigen Domain-Parametern (Parameter der ellipti sehen Kurve, zugrundeliegender Körper, Erzeugerpunkt auf der Kurve und dessen Ordnung) komprimiert und ein entsprechender digitaler Zahlenwert gebildet. Mit Hilfe des öffentlichen Schlüssels 9 und der bekannten Verifiziervorschrift nach dem ECDSA-Verfahren sowie der Signaturzahl 5 wird nun überprüft, ob die signierten Wägedaten 4 mit den ursprünglich signierten authentisch sind oder nicht. Dazu kann die Verifikation 10 sowohl vom Empfänger der Lieferdaten als auch von vertrauensvollen Stellen 12, 13 oder dem Waagenhersteller selbst durchge führt werden. Dazu kann der Empfänger eines Lieferscheins 8 beispielsweise auf einer vom Waagenhersteller bereitgestellten Internetseite die Lieferscheindaten 4, 5 mit dessen Signatur 5 eingeben. Der Waagenhersteller sucht sich den zugehörigen öf fentlichen Schlüssel 9 für die angegebene Waage 1 aus einem ihm zugänglichen Schlüsselverzeichnis 11 heraus und überprüft mit dem ihm bekannten Verifikationsalgorithmus die Signatur 5 und die ihr zugrundeliegenden Daten 4. Aus dieser Überprüfung kann dann der Waagenhersteller oder ein Dritter eine Ja/Nein-Aussage wegen Übereinstimmung oder Nichtübereinstimmung ableiten.

Bei einer Übereinstimmung der Signatur 5 mit den signierten Daten 4 ist es für den Empfänger mit an Sicherheit grenzender Wahrscheinlichkeit möglich, festzustellen, daß die dokumen tierten Daten 4 mit denen von dem identifizierten Wägeindikator 3 ursprünglich erstellten übereinstimmen. Insbesondere für eichpflichtige Wägedaten 4 und andere kostenpflichtige Meßmengen ergibt dies für den Warenverkehr eine Sicherheit, die manuelle Kontrollen vor Ort entbehrlich machen und weltweite Lieferströme von Waren und Dienstleistungen bis auf den Ursprungsort zurückverfolgen läßt. Dabei kann die Verifizierung 10 auch von zentralen vertrauenswürdigen Stellen oder durch einen öffentlichen Schlüssel zertifizierte zentrale oder lokale Stellen 12, 13 übernommen werden. Die Generierung des korrespondierenden Schlüsselpaares kann aber auch von einer vertrauensvollen oder zertifizierten Stelle erfolgen. Dabei muß dann der geheime private Schlüssel auch von einer vertrauensvollen Stelle in der Waage 1 gespeichert werden.

Die zur Signatur 5 meist erforderliche Datenkompression kann auch nach dem sogenannten SHA-l (Secure Hash Algorithm) oder nach dem RTPEMD-160 (RACE Integrity Primitives Evaluation Message Digitest) vorgenommen werden. Als Signaturalgorithmus kann insbesondere auch das nach seinen Erfindern Rivest, Sha mir und Adelman benannte RSA-Verfahren verwendet werden, soweit der Wägedatenprozessor oder die zur Verifikation 10 vorgesehene Stelle über genügend Rechenkapazität verfügt. Eine derartige Kompression und Signatur 5 von Meßwerten kann in allen Fällen erfolgen, in denen die Meßwerte gespeichert und für weitere Bearbeitungsschritte auf ihre Richtigkeit überprüft werden sollen. Dies kann nicht nur für abrechenbare Waren und Dienstleistungen von mit Meßgeräten erfaßten Mengen, sondern auch bei sicherheitsrelevanten Meßwerten erfolgen.

## Patentansprüche

1. Verfahren zur digitalen Sicherung von Messergebnissen mit
- einer Wägevorrichtung,
- - die eine Aufnehmervorrichtung (2) und
- - eine digitale Auswertevorrichtung (3) enthält,
- wobei die Aufnehmervorrichtung (2) physikalische Größen erfasst, die in der Auswertevorrichtung (3) in messwertspezifische Größen umgewandelt und mit zusätzlichen Daten und Parametern einen Messdatensatz bildet, der anzeigbar und/oder weiterverarbeitbar ist,
- wobei für die Wägevorrichtung (1) ein korrespondierender öffentlicher (9) und ein geheimer privater Schlüssel erstellt wird,
**dadurch gekennzeichnet, dass**
- das zur Sicherung notwendige Schlüsselpaar wird von der Wägevorrichtung selbsttätig erstellt,
- der geheime private Schlüssel in der Auswertevorrichtung (3) nicht auslesbar gespeichert und
- mit Hilfe des geheimen privaten Schlüssels und einem vorgegebenen Signaturalgorithmus Messwerte (4) oder der Messdatensatz signiert (5) werden,
- wobei der korrespondierende öffentliche (9) und der private Schlüssel durch die Wägevorrichtung mit einer ausgewählten Zufallszahl und einem vorgegebenen Verschlüsselungsalgorithmus erzeugt werden,
- wobei die Zufallszahl aus den niederwertigsten Bit des Analog-Digital-Wandlerergebnisses der Wägevorrichtung (1) derart gebildet wird, dass n-mal das niederwertigste Bit ausgelesen und zu einer n-stelligen Zufallszahl zusammengesetzt wird.

2. Verfahren nach Anspruch 1, **dadurch gekennzeichnet, dass** zur Signatur (5) der Messwerte (4) oder der Messdatensätze die Verschlüsselung und Kompression der Daten nach dem Signaturalgorithmus der elliptischen Kurven zugrundeliegender Körper (ECDSA) erfolgt.

3. Verfahren nach einem der vorhergehenden Ansprüche, **dadurch gekennzeichnet, dass** zur Verifikation (10) der signierten Messwerte (4) oder des signierten Messdatensatzes mit Hilfe der signierten Daten, der Signatur (5) und dem öffentlichen Schlüssel (9) die Authentizität der Messergebnisse oder des Messdatensatzes durch einen Empfänger, einen Messgerätehersteller oder einen Dritten überprüft wird.

4. Verfahren nach Anspruch 3, **dadurch gekennzeichnet, dass** zur Verifikation (10) der signierten Messwerte (4) oder des signierten Messdatensatzes der Empfänger der Daten diese dem Messgerätehersteller oder einem Dritten auf eine interaktive Internet-Seite eingibt und ein Inhaber der Seite mit Hilfe der signierten Daten (4), der Signatur (5), des öffentlichen Schlüssels (9) und einer Verifikationssoftware die Authentizität der Daten überprüft und das Ergebnis anzeigt.

## Claims

1. A method for digital backup of measurement results with
- a weighing device,
- - which contains a pickup device (2) and
- - a digital evaluation device (3),
- wherein the pickup device (2) detects physical quantities, which are converted into measured-value-specific quantities in the evaluation device (3) and which with additional data and parameters form a measurement data set which can be displayed and / or further processed,
- wherein for the weighing device (1), a corresponding public (9) and a secret private key is created,
**characterized in that**
- the key pair required for the backup is automatically created by the weighing device,
- the secret private key is stored in the evaluation device (3) in a non-readable manner and
- measured values (4) or the measurement data set are signed (5) using the secret private key and a specified signature algorithm,
- wherein the corresponding public (9) and the private key are generated by the weighing device by means of a chosen random number and a prescribed encryption algorithm
- wherein the random number is formed from the least significant bit of the analog-to-digital converter result of the weighing device in such a way that the least significant bit is read out n-times and is compiled to an n-digit random number.

2. A method according to claim 1, **characterized in that** for the signature (5) of the measured values (4) or of the measurement data set, the encryption and compression of the data is carried out according to the signature algorithm of the elliptic curves of underlying bodies (ECDSA).

3. A method according to any one of the preceding claims, **characterized in that** for the verification (10) of the signed measured values (4) or of the signed measurement data set, the authenticity of the measurement results or of the measurement data set is verified [sic - assume should be 'überprüft "wird"] by a receiver, a measurement equipment manufacturer or a third party with the aid of the signed data, the signature (5) and the public key (9).

4. A method according to claim 3, **characterized in that** for the verification (10) of the signed measured values (4) or of the signed measurement data set, the receiver of the data enters these for the measuring equipment manufacturer or a third party on an interactive web page and, with the aid of the signed data (4), the signature (5), the public key (9) and a verification software, the proprietor of the page verifies the authenticity of the data and displays the result.

## Revendications

1. Procédé pour la sécurisation numérique de résultats de mesure, avec
- un dispositif de pesage,
- qui comprend un dispositif de capteur (2) et
- un dispositif d'analyse numérique (3)
- le dispositif de capteur (2) mesurant des grandeurs physiques qui sont converties, dans le dispositif d'analyse (3), en grandeurs spécifiques à des valeurs de mesure et qui constituent, avec des données et des paramètres supplémentaires, un ensemble de données de mesure qui peut être affiché et/ou traité,
- une clé publique (9) et une clé privée secrète étant créée pour le dispositif de pesage (1),
**caractérisé en ce que**
- la paire de clés nécessaire pour la sécurisation est créée automatiquement par le dispositif de pesage,
- la clé privée secrète n'est pas enregistrée de manière lisible dans le dispositif d'analyse (3) et
- à l'aide de la clé privée secrète et d'un algorithme de signature prédéterminé, les valeurs de mesure (4) ou l'ensemble de données de mesure est signé (5),
- la clé publique (9) et la clé privée étant créées par le dispositif de pesage avec un nombre aléatoire sélectionné et un algorithme de chiffrement prédéterminé,
- le nombre aléatoire étant formé à partir du bit du plus faible poids du résultat du convertisseur analogique-numérique du dispositif de pesage (1) de façon à ce que le bit du plus faible poids soit lu n fois et soit ajouté à un nombre aléatoire à n chiffres.

2. Procédé selon la revendication 1, **caractérisé en ce que**, pour la signature (5) des valeurs de mesure (4) ou des ensembles de données de mesure, le chiffrement et la compression des données a lieu selon l'algorithme de signature des corps à base de courbes elliptiques (ECDSA).

3. Procédé selon l'une des revendications précédentes, **caractérisé en ce que**, pour la vérification (10) des valeurs de mesure signées (4) ou de l'ensemble de données de mesure signé, à l'aide des données signées, de la signature (5) et de la clé publique (9), l'authenticité des résultats de mesure ou de l'ensemble de données de mesure est vérifiée par un destinataire, un fabricant d'appareils de mesure ou un tiers.

4. Procédé selon la revendication 3, **caractérisé en ce que**, pour la vérification (10) des valeurs de mesure signées (4) ou de l'ensemble de données de mesure signé, le destinataire des données indique celles-ci au fabricant d'appareils de mesure ou à un tiers sur une page Internet interactive et un propriétaire de la page vérifie, à l'aide des données signées (4), de la signature (5), de la clé publique (9) et d'un logiciel de vérification, l'authenticité des données et affiche le résultat.
